# EUROPEAN PATENT SPECIFICATION

(11) **EP 0 713 599 B1**
(45) Date of publication and mention of the grant of the patent: **09.04.1997**
(21) Application number: 94903226.2
(22) Date of filing: 13.08.1993
(51) Int. Cl.: G11B 17/02, G11B 17/038

(54) **DISC CLAMP AND SPACER**
PLATTENEINSPANN- UND -ABSTANDSELEMENT
DISPOSITIFS DE SERRAGE ET D'ESPACEMENT POUR DISQUES

(43) Date of publication of application: 29.05.1996
(73) Proprietor: SEAGATE TECHNOLOGY, INC., Scotts Valley, California 95066-4544 (US)
(72) Inventor: JABBARI, Iraj, San Jose, CA 95125 (US); HICKOX, Thomas, A., Scotts Valley, CA 95066 (US); BATTU, Ramgopal, Canoga Park, CA 91306 (US)
(74) Representative: Sturt, Clifford Mark
(86) International application number: US9307652
(87) International publication number: WO9505660

(56) References cited:
- EP-A- 0 339 765
- WO-A-93/06599
- DE-A- 3 816 975
- US-A- 4 764 828
- US-A- 4 945 432
- US-A- 5 136 450
- IBM TECHNICAL DISCLOSURE BULLETIN. vol. 32, no. 6A , November 1989 , NEW YORK US page 129 'Disk pack assembly design'
- IBM TECHNICAL DISCLOSURE BULLETIN. vol. 32, no. 12 , May 1990 , NEW YORK US pages 365 - 367 'Disk stack clamping means'
- PATENT ABSTRACTS OF JAPAN vol. 10, no. 48 (P-431)(2105) 25 February 1986 & JP,A,60 193 156 (FUJITSU K.K.) 1 October 1985
- PATENT ABSTRACTS OF JAPAN vol. 10, no. 48 (P-431)(2105) 25 February 1986 & JP,A,60 193 156

## Description

### 1. FIELD OF THE INVENTION

The invention relates to the field of magnetic recording and in particular disc clamps and spacers for hard disc drive spindles and disc stacks.

### 2. BRIEF DESCRIPTION OF THE PRIOR ART

Disc clamps for magnetic hard disc drive spindles have as their primary objective the clamping of the magnetic hard discs in a stack onto the spindle so that the discs do not shift radially under shock. Such a radial shift, otherwise known in the industry as "disc slip", can result in total failure of the disc drive due to misalignment of the pre-recorded tracks on the slipped disc from the pre-recorded tracks on the other discs.

The primary method of disc clamps in the prior art is to provide a vertical clamping force on the top disc of a stack with the bottom disc of the stack abutting a spindle flange. The discs themselves are separated by spacers.

The required disc clamping force is determined by the shock specification of the disc drive. For example if the disc drive specification requires that the disc drive withstand a shock of 300 G's, a radial force must be applied to the disc on the order of three pounds. In order to achieve this force, the disc clamp must apply, for example, a 20 pound vertical clamping force because the coefficient of friction between the clamp and the disc is in the range of .15, which would translate a vertical or axial force of 201bs. into approximately 3 lbs. horizontal or radial force.

As disc drives become smaller, they are also becoming thinner. This puts sever constraints on the overall stack height of the disc/spindle assembly, which in turn, necessitates a reduction in the thickness of the discs and the height of the disc clamp above the spindle. As discs become smaller, there is also a tendency for the discs to warp into a potato chip shape due to the required clamping force of the disc clamp to prevent "disc slip". For all the above factors, a new disc clamping approach is required.

One approach suggested in PCT Application No. WO93/06599 is to employ an annular clamp and spacer having a plurality of fingers exerting a radial pressure on a first disc and a plurality of projections bearing on a second disc to control radial movement of the first disc and the separation of the two discs.

Another approach is suggested in IBM Technical Disclosure Bulletin Vol. 32, No. 6, November 1989, page 129, Disc Pack Assembly Design, which describes the use of a grooved split ring to clamp a plurality of discs. Each disc rests in a groove in the ring which is squeezed and slipped into the internal diameter of the discs, when the ring is released it exerts a radial clamping force on the discs.

### SUMMARY OF THE INVENTION

The invention comprises a disc spacer assembly having an integral flange which is intereference fit against the inside circumferential rim of a magnetic disc. This intereference fit is designed to apply to the disc the required radial force to resist "disc slip" that is traditionally applied by the clamp. The force of this disc spacer against the disc is provided by making the diameter of the spacer (flange) slightly larger than the inside diameter of the disc.

In a first embodiment, this invention provides a disc spacer comprising:
an annular spacer section and characterised by further comprising two integral annular flanges depending from the spacer section in a direction perpendicular to the radial direction to form a T-shape when viewed in cross section; and
means for providing a predetermined radial load to the inside diameter of discs abutting the flanges.

In a preferred embodiment, the spacer has a small gap at one location in the annulus of the spacer, so that the spacer may be compressed into a smaller diameter. The compressed spacer is fitted into the inside diameter of the disc and is released to provide a spring force against the inside diameter of the disc. Alternatively, the radial load can be applied by first cooling the slightly oversized disc spacer (no gap) before insertion into the inside diameter of the disc, such that when the spacer warms to operating temperature it expands to provide the required spring force and load against the inside diameter of the disc.

In a second embodiment this invention provides a disc drive spindle assembly comprising:
a disc/spacer assembly comprising:
at least two discs each having an inside circumferential rim;
and characterised by also comprising;
a disc spacer having two integral annular flanges depending from the spacer section in a direction perpendicular to the radial direction to form a T-shape when viewed in cross-section;
the height of each flange from the spacer section being less than the thickness of each disc;
the discs being mounted on said spacer with the respective discs having said inside rim abutting against respective of said spacer flanges with a predetermined radial force;
a spindle having a spindle flange;
the disc/spacer assembly mounted on said spindle with one of said two discs abutting said spindle flange and being sandwiched between the disc spacer's spacer section and the spindle flange;
a disc clamp mounted on the spindle and abutting an abutting surface of said disc spacer.

The disc spacer and disc assembly is mounted onto the disc drive spindle as an assembled unit and clamped onto the disc drive spindle by means of a disc clamp which abuts against the disc spacer. Because the disc clamp in this configuration is not required to apply a vertical or axial load on the top surface of the top disc in the stack, the clamp is arranged to apply its clamping load on a lip on the inside diameter of the spacer assembly. This lip is arranged to be axially below the top surface of the top most disc, such that, both the top of the clamp and the clamp's screw lie axially at or below the top surface of the top disc of the disc stack.

In an alternative arrangement, the abutting surface of the lip of the disc clamp is slightly inclined, such that the disc clamp, when applying force to the lip, applies not only a vertical (axial) force but also, by means of force translations caused by the inclined surface, a radial force on the top most disc of the disc stack to provide additional clamping force to maintain the top most disc in radial alignment.

Another feature of the present invention comprises spacing the bottom most disc spacer flange slightly away from the flange of the spindle upon which the disc stack is clamped, such that the force applied to the lip of the disc spacer is applied to the lower disc in the disc stack in a vertical or axial direction, sandwiching and clamping the lower disc between the disc spacer portion of the disc spacer assembly and the spindle flange. This additional axial load translates, as above mentioned, into an additional radial load to assist in preventing "disc slip".

An additional feature of the present invention lies in providing a small cut or notch between the flange section and the disc spacer section of the disc spacer assembly, such that the disc spacer flange may be physically deformable in the radial direction. This assists in applying a radial load in a uniform manner to the inside diameter of the disc.

### BRIEF DESCRIPTION OF THE DRAWINGS

Figure 1, is a partial cross sectional view of a disc drive spindle having a disc spacer assembly according to the present invention.

Figure 2, is a top plan view of the disc spacer assembly of the present invention.

Figure 3, is a top plan view of the disc spacer assembly of the present invention in a intereference fit arrangement with a magnetic hard disc.

Figure 4, is a partial cross sectional view of a disc drive spindle having an alternative disc spacer assembly according to the present invention.

Figure 5, is a detailed view of a portion of the alternative embodiment of figure 4, showing in particular the force vectors resulting from the actual load of the disc clamp on the inclined lip of the disc spacer assembly.

Figure 6, is a top plan view of a disc spacer according to the present invention, including disc warping control bumps.

### DETAILED DESCRIPTION OF THE PREFERRED EMBODIMENT

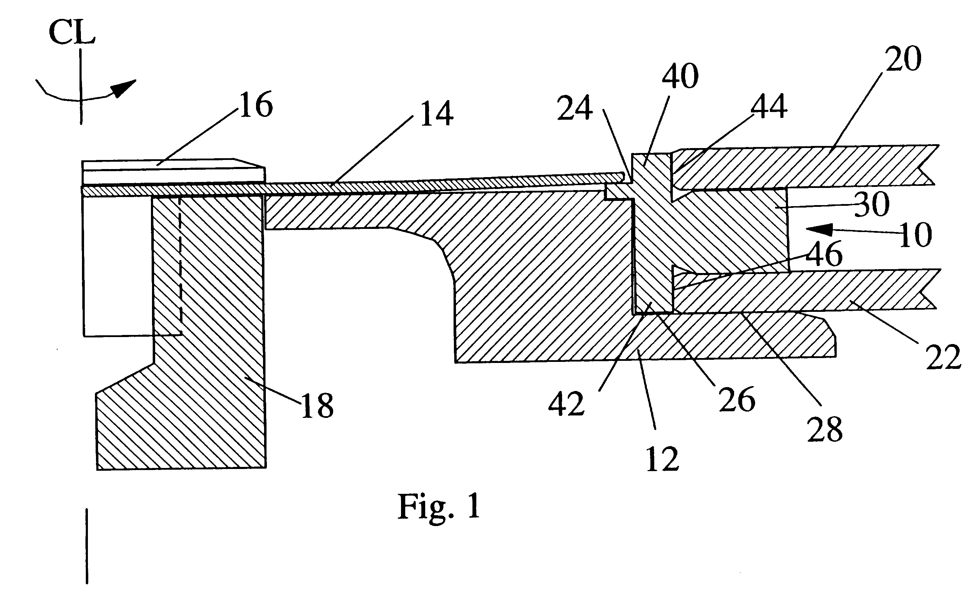

Referring now to figure 1, the preferred disc spacer assembly 10 is shown mounted on a disc drive spindle flange 12 by means of an axial clamping force applied by disc clamp 14 through clamp screw 16 in a disc drive rotating spindle shaft 18. The disc spacer assembly 10 comprises a disc spacer section 30 and two integral flanges 40 and 42 extending from the inside diameter of the spacer section 30, such as to form a T in cross section when viewed towards the inside diameter of the spacer assembly. Two magnetic hard discs 20 and 22 are mounted on the spacer 10 such that they both ride upon the spacer section 30 of the spacer assembly and are abutting at their inside diameter 44 and 46 respectively against the respective flange sections 40 and 42 of he spacer assembly 10. The axial clamping force applied by disc clamp 14 is applied against a lip 24 which extends radially inward from the disc spacer assembly 10 below the top surface of the flange 40, which is in turn axially below the top surface of the disc 20. By means of the arrangement, the top of the clamp screw 16 is also at or below the top surface of the top disc 20.

The lower flange 42 of the disc spacer assembly 10, is arranged such that there is a small gap 26 between the bottom surface of this flange and the adjacent surface of spindle flange 12. By this arrangement the axial force applied by the disc clamp 14 is transmitted by the spacer section 30 to the lower disc 22, thereby sandwiching the lower disc 22 between the disc spacer section 30 and the spindle flange 12. This not only serves to maintain the entire assembly of the disc spacer 10 and connected discs 20 and 22 on the spindle flange 12, but also assists, by means of the frictional force between the three components to assist in applying additional radial load to the lower disc 22.

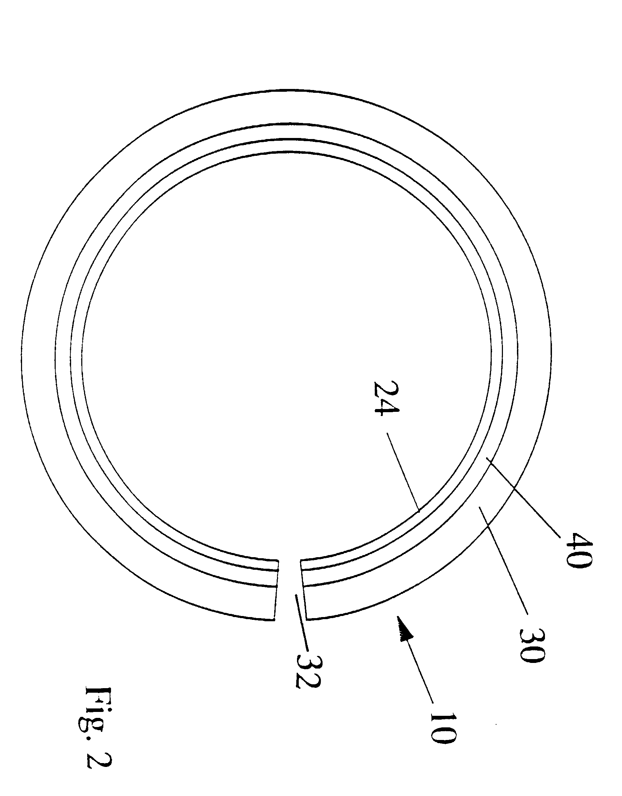

Referring to Figure 2, the disc spacer assembly 10 is shown in top plan view. In this figure reference numerals 30, 40 and 24 refer respectively to the disc spacer section 30, upper flange 40 and lip 24. An additional feature shown in this figure and not shown in figure 1, is the small gap 32 in the spacer ring (annulus). This gap 32 provides the means by which the spring force of the spacer assembly 10, may be applied to the inside diameter of the discs 20 or 22. The diameter of the disc spacer assembly 10 is made such that it is slightly larger than the inside diameter of the disc 20 or 22. Spacer 10 must be compressed slightly by means of the gap 32 to fit within the inside diameter of the disc 20 and 22. Thereafter, when the compression is released, the resilience of the spacer assembly provides a spring force against the inside diameter of the disc 20 and 22. By proper arrangement of materials and amount of compression by means the proper selection of the diameter of the spacer assembly 10, the necessary and required radial load may be applied to the inside diameter of the disc to maintain it against required shock load. Again, as one of ordinary skill in the art will appreciate, the amount of load will be varied according to the various requirements of the various applications for which the disc drive is used. For example, if the disc drive is used in a portable computer, which is subject to being dropped, a higher shock load is required.

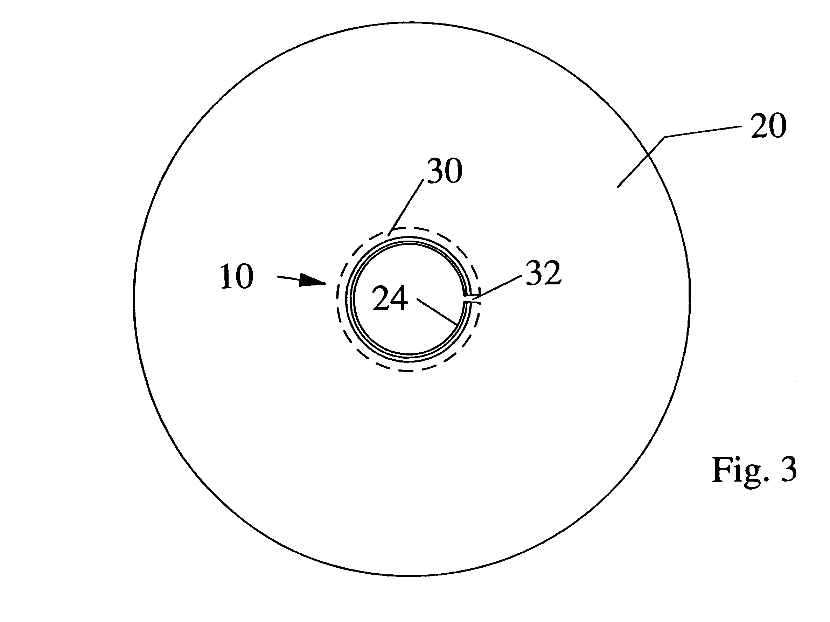

Figure 3, shows the disc clamp assembly 10, mounted in a disc 20. Shown in the figure are the disc spacer 10, the disc spacer section 30 in a phantom line and lip 24. With the discs mounted onto the disc spacer assembly 10, the combined units form a disc stack assembly which is mounted as a single structure to the disc drive spindle 12. This method of mounting eliminates the requirement to properly align the discs 20 and 22 when mounting them onto the spindle 12. Typically disc drive spindles are composed of steel, while the magnetic discs are composed of aluminium. This difference in materials causes a difference in coefficients of thermal expansion which will result in a forced "disc slip" if the inside diameter of the magnetic disc is abutting against the outside diameter of the steel spindle. When the discs are instead mounted on the disc spacer assembly of the present invention, the disc spacer assembly can be and preferably is made of the same material as the disc, thereby obviating any coefficient of thermal expansion mismatches and reducing, if not eliminating, any induced disc slip problem caused by materials differences between the spindle and the disc. Thus, as a result, the disc stack assembly comprised of the disc spacer assembly and magnetic discs 20 and 22 can be mounted as a unit on the disc spindle without the necessary steps of maintaining a radial separation between the two. Thus, in practice, the discs are first assembled onto the disc spacer assembly and the disc spacer assembly and disc stacks mounted around the spindle to abut against the spindle flange 12. Clamp 14 is then mounted onto the spindle shaft by means of clamp screw 16. This entire method of assembly is vastly improved in efficiency over any prior art approach.

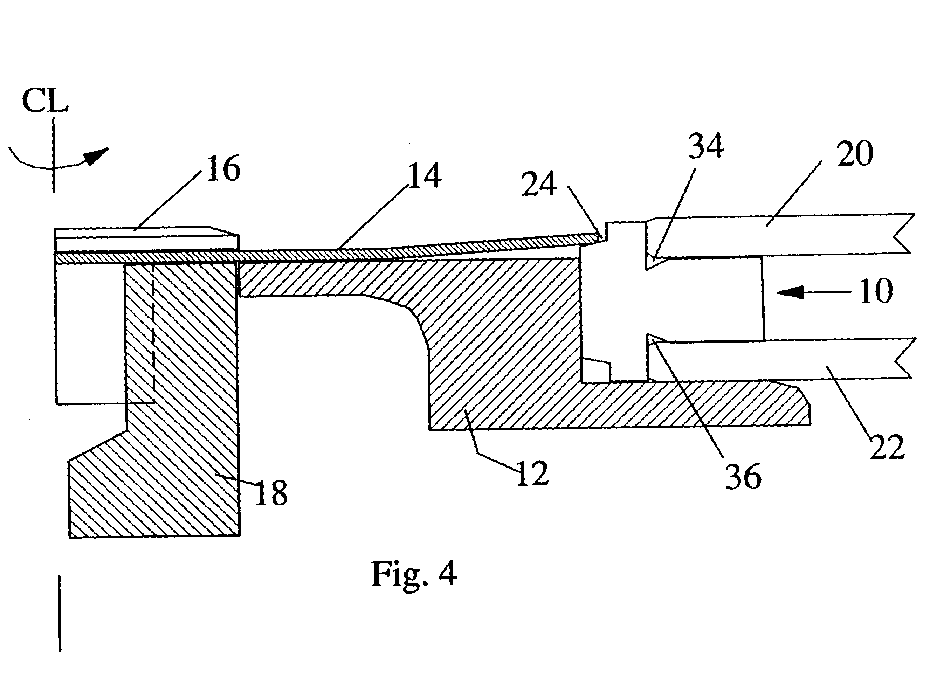

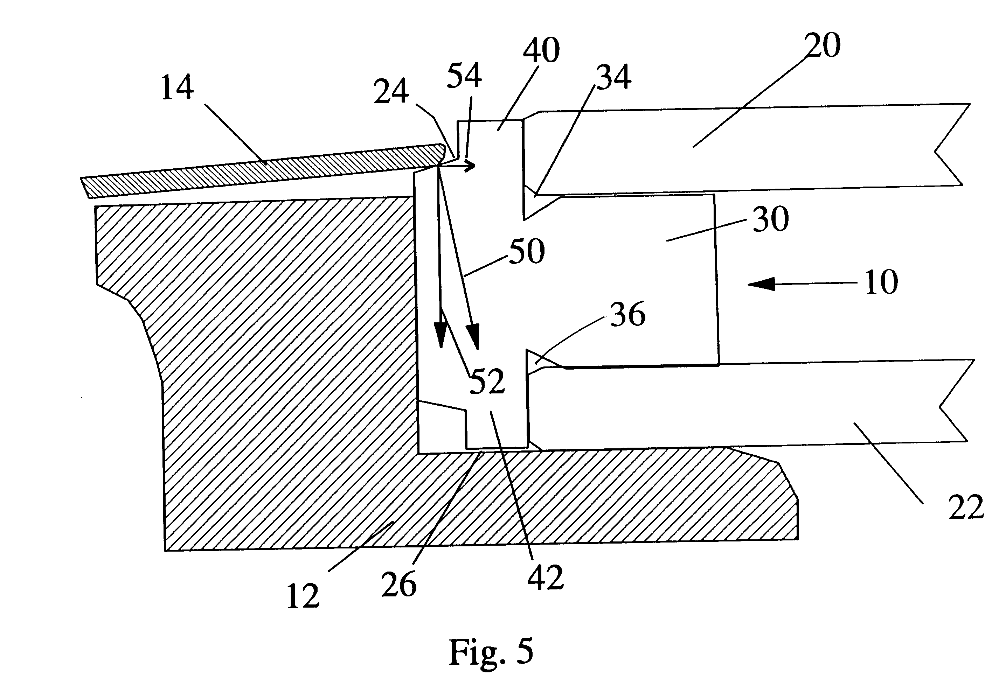

Figure 4, shown an alternative disc spacer assembly 10 configuration, in which the lip 24 is provided with an included surface such that, as when in Figure 5, the force applied by disc clamp 14, illustrated by arrow 50, is translated into axial force 52 and radial force 54. The axial force 52 behaves in the same fashion and for the same purposes as the axial force of the disc clamp in Figure 1. However, the radial force 54 assists in providing an additional radial force against the inside diameter of the top disc 20. This arrangement will tend to equalise the amount of radial force applied to both the top disc 20 and to the bottom disc 22, because as before noted, the axial load of the disc clamp 14 on the disc spacer assembly 10 provides an additional radial holding force to the bottom disc 22 by means of the sandwiching effect of this disc 22 between the disc spacer section 30 and spindle flange 12.

As an additional feature, this version of the disc spacer assembly 10, includes cutouts 34 and 36 between the spacer section 30 and the flange sections 40 and 42 to thereby allow the flange section to be physically deformed in the radial direction because of the reduced material thickness at the respective cutouts 34 and 36. This radial deformability assists in the translation of the radial force from the disc clamp 14, to the inside diameter of the top disc 20.

An additional feature of this embodiment of the invention is that the disc spacer assembly flange sections may be made identical in structure so that the structure is symmetrical about a line drawn through the centre of the spacer. Thus, the spacer assembly 10 would have not true top and bottom flange (40 or 42), because they would be identical in structure. This would assist in the manufacturing process.

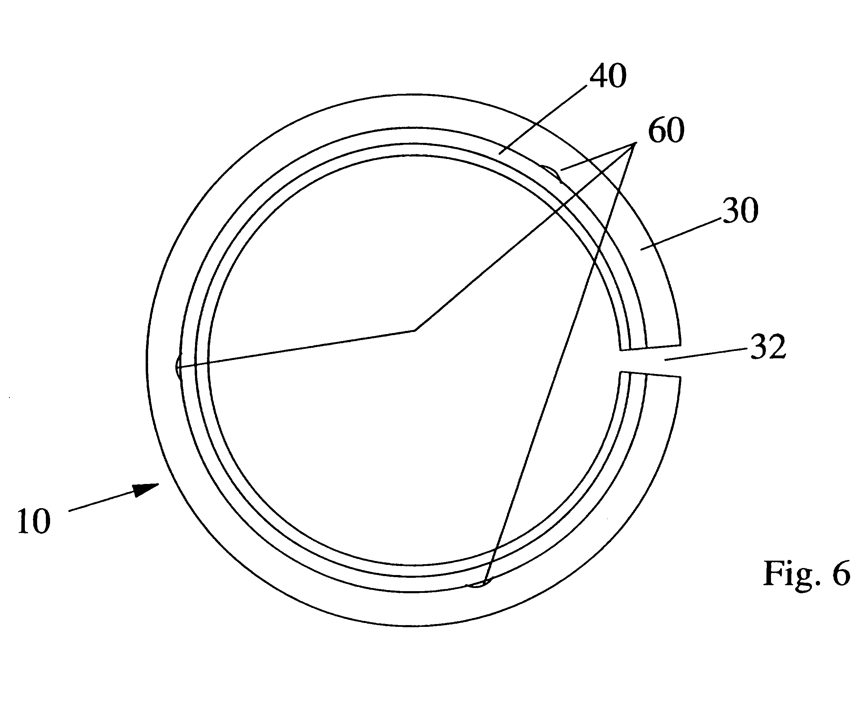

An additional feature of the present invention as shown, in connection with Figure 6, which is top plan view of the disc spacer 10. In some disc drive applications, the required radial load to prevent "disc slip" can be so high that radial load would induce disc warping, otherwise known as "potato chipping". This warping if it is uncontrolled can result in an unacceptable disc runout performance. In such situations, the prior art has taught that if one controls the profile of the runout, the runout can provide an actual increase in disc performance. For example, U.S. Patent 4,875,118 to Farid Kaymaram.

In Figure 6, the controlled runout is provided by bumps 60 applied to the disc spacer flange 40 at predetermined radial spacings depending on the degree and profile desired. In the figure, there are three bumps 60 shown at radial spacings of 120° with one of the bumps being diametrically opposite the gap in the annulus at 32.

The discussion of the specific features of the preferred embodiments, should not be taken as a limitation on the scope of the invention in which we claim:

## Claims

1. A disc spacer (10) comprising:
an annular spacer section (30) and characterised by further comprising two integral annular flanges (40, 42) depending from the spacer section in a direction perpendicular to the radial direction to form a T-shape when viewed in cross section; and
means for providing a predetermined radial load to the inside diameter of discs abutting the flanges.

2. A spacer of claim 1 wherein said radial load is provided by said flanges applying spring forces to said discs.

3. A spacer of claim 2 wherein said means further comprise a gap (32) in the annulus in the spacer.

4. A spacer of any one of claims 1 to 3 further including an integral lip (24) formed on the inside diameter of said spacer, the lip having a disc clamp abutting surface axially below the top surface of the integral flange.

5. A spacer of claim 4 wherein the disc clamp abutting surface is inclined relative to both the axial and radial directions of the spacer and is thereby adapted to translate a force applied to its surface into both axial and radial forces.

6. A spacer of claim 5 further including notches (34,36) formed in the spacer at the intersection between the flanges and spacer sections of the spacer to thereby increase the radial deformability of the flanges under radial load.

7. A disc drive spindle assembly comprising:
a disc/spacer assembly (10) comprising:
at least two discs (20, 22), each having an inside circumferential rim (44, 46);
and characterised by also comprising;
a disc spacer (30) having two integral annular flanges (40, 42) depending from the spacer section in a direction perpendicular to the radial direction to form a T-shape when viewed in cross-section;
the height of each flange from the spacer section being less than the thickness of each disc;
the discs being mounted on said spacer with the respective discs having said inside rim abutting against respective of said spacer flanges with a predetermined radial force;
a spindle (12) having a flange (28);
the disc/spacer assembly being mounted on said spindle with one of said two discs abutting said spindle flange and being sandwiched between the disc spacer's spacer section and the spindle flange (28);
a disc clamp (14) mounted on the spindle and abutting an abutting surface (24) of said disc spacer.

8. A disc drive spindle assembly of claim 7 further including at least three radially spaced bumps (60) formed on each disc spacer flange (40,42) which provide a controlled interface between the respective flanges and discs to impart a controlled disc warp profile.

9. A disc drive spindle assembly of claim 7 or claim 8 wherein said disc spacer abutting surface comprises an inclined surface which translates a downward force applied by the disc clamp into both radial and axial forces, the radial force acting to increase the radial force of said spacer on the inside rims of said discs, the axial force acting to hold the disc/spacer assembly on said spindle flange (28).

## Patentansprüche

1. Platten-Abstandselement (10) mit:
einem ringförmigen Abstandselementen-Abschnitt (30), dadurch gekennzeichnet, daß es weiterhin zwei einstückige ringförmige Flansche (40,42), die von dem Abstandselementen-Abschnitt in einer Richtung senkrecht zur der Radialrichtung herabhängen, um bei Betrachtung im Querschnitt eine T-Form zu bilden, und
Einrichtungen zur Lieferung einer vorgegebenen radialen Last auf den Innendurchmesser von an den Flanschen anliegenden Platten aufweist.

2. Abstandselement nach Anspruch 1,
bei dem die radiale Last dadurch geliefert wird, daß die Flansche Federkräfte auf die Platten ausüben.

3. Abstandselement nach Anspruch 2,
bei dem die Einrichtungen weiterhin einen Spalt (32) in dem Ring des Abstandselementes umfassen.

4. Abstandselement nach einem der Ansprüche 1 bis 3,
das weiterhin eine einstückige Lippe (24) einschließt, die auf dem Innendurchmesser des Abstandselementes ausgebildet ist, wobei die Lippe eine Platten-Einspannelementen-Anlageoberfläche axial unterhalb der oberen Oberfläche des einstückigen Flansches aufweist.

5. Abstandselement nach Anspruch 4,
bei dem die Anlageoberfläche für das Platten-Einspannelement sowohl gegenüber der axialen als auch der radialen Richtung des Abstandselementes geneigt ist und hierdurch zur Umsetzung einer auf ihrer Oberfläche ausgeübten Kraft in sowohl axiale als auch radiale Kräfte ausgebildet ist.

6. Abstandselement nach Anspruch 5,
das weiterhin in dem Abstandselement am Schnittpunkt zwischen den Flanschen und den Abstandselementen-Abschnitten des Abstandselements ausgebildete Kerben (34,36) aufweist, um die radiale Verformbarkeit der Flansche unter radialer Belastung zu vergrößern.

7. Spindelbaugruppe eines Plattenlaufwerkes mit:
einer Platten-Abstandselementen-Baugruppe (10) mit:
zumindestens zwei Platten (20,22), die jeweils einen inneren Umfangsrand (44,46) aufweisen,
dadurch gekennzeichnet, daß weiterhin:
ein Platten-Abstandselement (30) mit zwei einstückigen ringförmigen Flanschen (40,42) vorgesehen ist, die von dem Abstandselementen-Abschnitt in einer Richtung senkrecht zur Radialrichtung herabhängen, um bei Betrachtung im Querschnitt eine T-Form zu bilden,
die Höhe jedes Flansches von dem Abstandselementen-Abschnitt kleiner als die Dicke jeder Platte ist,
die Platten auf dem Abstandselement so befestigt sind, daß die jeweiligen Platten mit ihrem inneren Rand gegen einen jeweiligen der Abstandselementen-Flansche mit einer vorgegebenen radialen Kraft anliegen,
eine Spindel (12) vorgesehen ist, die einen Flansch (28) aufweist,
die Platten-Abstandselementen-Baugruppe auf der Spindel befestigt ist, wobei eine der beiden Platten an dem Spindel-Flansch anliegt und zwischen dem Abstandselementen-Abschnitt des Platten-Abstandselementes und dem Spindel-Flansch (28) eingeschichtet ist,
ein Platten-Einspannelement (14) vorgesehen ist, das auf der Spindel befestigt ist und gegen eine Anlageoberfläche (24) des Platten-Abstandselementes anliegt.

8. Spindelbaugruppe für ein Plattenlaufwerk nach Anspruch 7,
die weiterhin zumindestens drei mit radialen Abstand angeordnete Vorsprünge (60) einschließt, die auf jedem Platten-Abstandselementen-Flansch (40,42) ausgebildet sind und eine kontrollierte Grenzfläche zwischen den jeweiligen Flanschen und den Platten bilden, um ein kontrolliertes Platten-Verwerfungsprofil hervorzurufen.

9. Spindelbaugruppe für ein Plattenlaufwerk nach Anspruch 7 oder 8, bei der die Anlageoberfläche des Platten-Abstandselements eine geneigte Oberfläche umfaßt, die eine von dem Platten-Einspannelement ausgeübte, nach unten gerichtete Kraft in sowohl radiale als auch axiale Kräfte umsetzt, wobei die radiale Kraft im Sinn einer Vergrößerung der radialen Kraft des Abstands-Elementes auf die Innenränder der Platten wirkt, und die axiale Kraft im Sinn eines Festhaltens der Platten/Abstandselementen-Baugruppe auf dem Spindelflansch (28) wirkt.

## Revendications

1. Dispositif espaceur de disques (10) comprenant :
une partie d'espacement annulaire (30), caractérisé en ce qu'il comprend en outre deux brides annulaires incorporées (40, 42) rattachées à la partie d'espacement dans une direction perpendiculaire à la direction radiale, de façon à constituer une forme en T en section transversale, et
un moyen destiné à fournir une charge radiale prédéterminée sur le diamètre intérieur des disques en butée contre les brides.

2. Dispositif espaceur suivant la revendication 1, dans lequel ladite charge radiale est fournie par le fait que lesdites brides appliquent une force élastique auxdits disques.

3. Dispositif espaceur suivant la revendication 2, dans lequel ledit moyen comprend en outre un interstice (32) dans la couronne du dispositif espaceur.

4. Dispositif espaceur suivant l'une des revendications 1 à 3, comportant en outre une lèvre incorporée (24) formée sur le diamètre intérieur dudit dispositif espaceur, ladite lèvre présentant une surface de butée pour serre-disque située axialement au-dessous de la surface supérieure de la bride incorporée.

5. Dispositif espaceur suivant la revendication 4, dans lequel la surface de butée pour serre-disque est inclinée par rapport à la fois aux directions axiale et radiale du dispositif espaceur, et est donc susceptible de convertir une force appliquée à sa surface en forces à la fois axiale et radiale.

6. Dispositif espaceur suivant la revendication 5, comportant en outre des encoches (34, 36) formées dans le dispositif espaceur à l'intersection entre les brides et les parties d'espacement du dispositif d'espacement, pour augmenter ainsi la déformabilité radiale des brides sous charge axiale.

7. Ensemble à broche pour l'entraînement de disques comprenant :
un ensemble disque/dispositif espaceur (10) comprenant :
au moins deux disques (20, 22) ayant chacun un rebord circonférentiel intérieur (44, 46) ,
caractérisé en ce qu'il comprend également :
un dispositif espaceur de disques (30) ayant deux brides annulaires incorporées (40, 42) rattachées à la partie d'espacement suivant une direction perpendiculaire à la direction radiale pour constituer une forme en T en section transversale ;
la hauteur de chaque bride à partir de la partie d'espacement étant inférieure à l'épaisseur de chaque disque ;
les disques étant montés sur ledit dispositif espaceur de telle sorte que ledit rebord intérieur du disque respectif soit appliqué contre ladite bride d'espacement respective avec une force radiale prédéterminée ;
une broche (12) ayant une bride (28) ;
l'ensemble disque/dispositif espaceur étant monté sur ladite broche de telle sorte que l'un des deux disques soit en butée contre ladite bride de broche, et soit intercalé entre la partie d'espacement du dispositif espaceur de disques et la bride de broche (28) ;
un serre-disque (14) monté sur la broche et venant en butée contre une surface de butée (24) dudit dispositif espaceur de disque.

8. Ensemble à broche pour l'entraînement de disques suivant la revendication 7, comprenant en outre au moins trois bosses (60) espacées radialement, formées sur chaque bride (40, 42) du dispositif espaceur de disques et constituant une interface commandée entre les brides et disques respectifs pour donner un profil gondolé de disque commandé.

9. Ensemble à broche pour l'entraînement de disques suivant la revendication 7 ou la revendication 8, dans lequel ladite surface de butée du dispositif espaceur de disques comprend une surface inclinée qui convertit une force appliquée vers le bas par le serre-disque en deux forces radiale et axiale, la force radiale servant à augmenter la force radiale exercée par ledit dispositif espaceur sur les rebords intérieurs desdits disques, la force axiale servant à maintenir l'ensemble disque/dispositif d'espacement sur ladite bride de broche (28).
